# EUROPÄISCHE PATENTSCHRIFT

(11) **EP 3 656 527 B1**
(45) Veröffentlichungstag und Bekanntmachung des Hinweises auf die Patenterteilung: **17.08.2022**
(21) Anmeldenummer: 19207068.8
(22) Anmeldetag: 05.11.2019
(51) Int. Cl.: B29C 33/38, B29C 33/42, B29C 70/08, B29C 70/30

(54) **FERTIGUNGSVERFAHREN SOWIE VERFORMBARE KONSTRUKTIONSPLATTE ZUM FORMLOSEN HERSTELLEN EINES FASERVERSTÄRKTEN FORMTEILS, INSBESONDERE EINES BOOTSRUMPFS**
MANUFACTURING METHOD AND DEFORMABLE CONSTRUCTION PLATE FOR THE MOULD-FREE PRODUCTION OF A FIBRE-REINFORCED MOULDED PART, ESPECIALLY A BOAT HULL
PROCÉDÉ DE FABRICATION AINSI QUE PLAQUE DE CONSTRUCTION DÉFORMABLE DESTINÉE À LA FABRICATION SANS FORME D'UNE PIÈCE MOULÉE RENFORCÉE PAR DES FIBRE, EN PARTICULIER D'UNE COQUE D'EMBARCATION

(30) Priorität: 22.11.2018 CH 14392018
(43) Veröffentlichungstag der Anmeldung: 27.05.2020
(73) Patentinhaber: Bootswerft Heinrich AG, 8280 Kreuzlingen (CH)
(72) Erfinder: Hoffmann, Bernd, 78462 Konstanz (DE)
(74) Vertreter: Gachnang, Hans Rudolf

(56) Entgegenhaltungen:
- EP-A2- 0 487 945
- WO-A1-02/095154
- US-A- 4 032 689
- US-A1- 2005 006 823
- US-A1- 2009 084 932

## Beschreibung

Die vorliegende Erfindung betrifft ein Fertigungsverfahren sowie eine verformbare Konstruktionsplatte zum formlosen Herstellen eines faserverstärkten dreidimensionalen Formteils mit zumindest bereichsweise gekrümmter Oberfläche, beispielsweise zum formlosen Herstellen eines faserverstärkten Bootsrumpfs, Rotorblattes oder Fassadenelements.

Formteile mit zumindest bereichsweise gekrümmter Oberfläche, insbesondere Bootsrümpfe, aus faserverstärktem Kunststoff werden auf verschiedene Weise hergestellt. Ausgangspunkt für die Herstellung ist in Regel eine vollflächige Negativform, in welcher das herzustellende Formteil aufgebaut wird. Dabei stellt die Negativform eine formgebende geschlossene Oberfläche bereit, welche ein vollständiges Negativ des Oberflächenverlaufs des herzustellenden Formteils nachbildet.

Was die Herstellung von Bootsrümpfen betrifft, so werden typischerweise nach Aufbringen eines Trennmittels und allenfalls eines Gelcoats auf die formgebende geschlossene Oberfläche der Negativform Matten aus Glasfaser- oder Kohlefasergewebe in die Form eingelegt und durch Polyester oder flüssiges Epoxidharz miteinander verbunden. Eine kostengünstigere Methode besteht darin, auf den Gelcoat Glasfaserabschnitte vermischt mit flüssigem Polyester oder Epoxidharz aufzuspritzen. Gemäss einem weiteren, etwa aus US 4,032,689 bekannten Verfahren werden verformbare Platten aus faserverstärktem Material, etwa dünne Platten aus Kohle- oder Glasfaser, zwischen denen eine Schaumstoffschicht angeordnet ist, in die Negativform eingelegt. Um solche Platten dreidimensional verformbar zu machen, ist die Schaumstoffschicht aus stabförmigen oder würfelförmigen Schaumstoffkörpern aufgebaut, die abschnittsweise über eine Papierschicht miteinander verbunden sind. Die Papierschicht erlaubt ein Verbiegen der an sich steifen Schaumstoffkörper relativ zueinander. Unter und über den durch Papier zusammengehaltenen Schaumstoffkörpern sind die glasfaserverstärkten Matten angeordnet, welche mit einer Matrix, z.B. Epoxidharz oder Polyester imprägniert sind. Nach dem Einlegen der so miteinander verbundenen Körper in die Negativform können die imprägnierten Matten zu einem steifen Formteil aushärten. Dieses Bauverfahren kann erfolgreich angewendet werden, wenn eine Negativform vorhanden ist und darin eine grosse Anzahl von Bootsrümpfen hergestellt werden kann. Die Kosten für die Herstellung einer Negativform sind jedoch für Einzelbauten nicht tragbar.

Ein weiteres, beispielsweise aus WO 2002/095154 A1 bekanntes Verfahren basiert ebenfalls auf der Verwendung eines Schaumstoffelements, welches mit Schlitzen versehen ist, um das Element dreidimensional verformen zu können. Dabei werden die von den Schlitzen gebildeten Hohlräume nach dem Einlegen in eine Negativform mit flüssigem Epoxidharz oder Polyester aufgefüllt. Ein ähnliches Verfahren ist auch aus DE 691 29 972 T2 bekannt.

EP 487 945 A2 beschreibt Elemente mit einer porösen Schicht auf der ein mit Schlitzen versehenes Substrat angeordnet ist. Zum Fixieren gekrümmter Formen wird in die aufgeweiteten Schlitze Spachtelmasse eingebracht. WO 02/095154 A1 beschreibt Elemente, welche auf beiden Seiten einer Schicht aus flexibler Maschenware von Schlitzen getrennte Plattensegmente aufweisen. Auch hier wird nach dem gewünschten Krümmen der Elemente aushärtbares Material in die Schlitze eingebracht.

Ein weiteres Herstellungsverfahren für Bootsrümpfe besteht darin, dass auf ein sogenanntes Mallengerüst - d.h. eine Vielzahl von in Kielrichtung des zu erzeugenden Bootsrumpfs beabstandet angeordneten formgebenden Schablonen - schmale, biegsame Leisten, etwa Leisten aus leichtem Zedernholz, aufgebracht und anschliessend mit einer Glasfasermatte auf der Aussenseite überzogen werden. Die Leisten bleiben mit der faserverstärkten Schicht verbunden und können innen durch eine weitere faserverstärkte Schicht bedeckt werden, so dass die Leisten als Distanzhalter zwischen zwei steifen Kunststoffschichten fungieren. Die nach diesem Verfahren hergestellten Rümpfe sind verhältnismässig kostengünstig. Für leichte Boote, wie sie heute zunehmend verlangt werden, sind solche Rümpfe jedoch oft zu schwer.

US 2005/0006823 A1 beschreibt das Herstellen eines Mehrschichtproduktes auf parallel verlaufenden, voneinander beabstandeten Schablonen, wobei nacheinander eine erste und zumindest eine zweite einzelne Schicht aufgelegt werden. Mittels eines zwischen den Schichten angelegten Vakuums wird aushärtbares Material zwischen die Schichten eingebracht.

Aufgabe der vorliegenden Erfindung ist es daher, ein Verfahren zu schaffen, mit welchem hoch beanspruchbare dreidimensionale Formteile, beispielsweise Bootsrümpfe, Rotorblätter oder Fassadenelemente kostengünstig hergestellt werden können, ohne dass eine teure Negativform dafür bereitgestellt werden muss. Eine weitere Aufgabe der Erfindung ist die Schaffung einer Konstruktionsplatte, deren Oberfläche vorzugsweise direkt die Aussenhaut eines daraus herstellbaren dreidimensional geformten hoch beanspruchbaren Formteils, insbesondere eines Bootsrumpfes, Rotorblattes oder Fassadenelements bilden kann.

Diese Aufgabe wird durch ein Verfahren gemäss dem unabhängigen Anspruch 1 sowie durch eine verformbare Konstruktionsplatte gemäss dem unabhängigen Anspruch 13 gelöst. Vorteilhafte Ausgestaltungen der Erfindung sind Gegenstand der abhängigen Ansprüche.

Gemäss der Erfindung wird ein Fertigungsverfahren zum formfreien Herstellen eines faserverstärkten dreidimensionalen Formteils mit zumindest bereichsweise gekrümmter Oberfläche, beispielsweise eines faserverstärkten Bootsrumpfs, Rotorblattes oder Fassadenelements, bereitgestellt, das die folgenden Schritte umfasst:
- Bereitstellen eines Laminats, das wenigstens eine Schaumstoffschicht und eine erste faserverstärkte und fluiddichte Trägerschicht aufweist, wobei die erste Trägerschicht mit einer ersten Seite der Schaumstoffschicht verbunden ist;
- Verformbarmachen des Laminats durch einseitiges, vorzugsweise computergesteuertes Einbringen eines oder mehrerer nutenförmiger Schlitze in das Laminat gemäss einem vorbestimmten Schlitzmuster, wobei der eine oder die mehreren Schlitze die Schaumstoffschicht vollständig oder nur teilweise durchdringen, aber nicht in die erste Trägerschicht eindringen;
- Bereitstellen eines Schablonengerüsts, insbesondere eines negativen Mallengerüsts, mit mehreren Stegschablonen, die entlang einer ersten Richtung ausgerichtet und voneinander beabstandet an einer jeweiligen Längsposition entlang einer zur ersten Richtung senkrecht verlaufenden zweiten Richtung angeordneten sind, wobei jede Stegschablone eine formgebende Kontur aufweist, die zumindest bereichsweise einem Querschnittsprofil des herzustellenden Formteils entlang der ersten Richtung an der jeweiligen Längsposition entspricht, so dass die Konturen der Steg-Schablonen in ihrer Abfolge im Schablonengerüst einen Oberflächenverlauf des herzustellenden Formteils nachbilden;
- Einlegen des verformbar gemachten Laminats in das Schablonengerüst, wobei die erste Trägerschicht mit ihrer Ausseiten mit den formgebenden Konturen der Stegschablonen in Kontakt gelangt, so dass das Laminat auf der Aussenseite der ersten Trägerschicht den vom Schablonengerüst definierten Oberflächenverlauf des herzustellenden Formteils einnimmt;
- Vergießen der nach Einlegen in das Schablonengerüst in den Schlitzen verbleibenden Freiräume mit Reaktionsharz im Infusions-Verfahren, insbesondere im Vakuum-Infusions-Verfahren, oder Aufbringen eines mit Reaktionsharz vorimprägnierten Faser-Matrix-Haibzeuges auf die der ersten Trägerschicht gegenüberliegende Seite des Laminats, oder Aufbringen eines Fasergewebe-Reaktionsharz-Handlaminats auf die der ersten Trägerschicht gegenüberliegende Seite des Laminats;
- Aushärten-Lassen des Reaktionsharzes;
- Entnehmen des so erhaltenen Formteils aus dem Schablonengerüst nach dem Aushärten des Reaktionsharzes.

Das erfindungsgemässe Verfahren zeichnet sich zum einen durch die Verwendung eines Schablonengerüsts, insbesondere eines negativen Mallengerüsts aus, das mehrere Stegschablonen bzw. Mallen umfasst. Im Gegensatz zu vollflächigen Negativformen sind derartige Schablonen- bzw. Mallengerüste sehr kostengünstig herstellbar, etwa aus preisgünstigen Spanplatten. Dennoch erlauben sie - wie vollflächige Negativformen - eine Mehrfachverwendung. Zudem lässt sich das Schablonengerüst in vorteilhafter Weise bis zur Wiederwendung vorübergehend zerlegen und benötiget dabei nur wenig Stauraum. Insbesondere wird durch die Verwendung eines Schablonengerüsts ein "formfreies" Herstellen des Formteils realisiert.

Zum anderen zeichnet sich das Verfahren durch die Verwendung des erfindungsgemässen Laminats sowie dessen Verformbarmachen durch einseitiges Einbringen von Schlitzen, z.B. nutenförmigen Schlitzen aus. Die nutenförmigen Schlitze, die die Schaumstoffschicht vollständig oder nur teilweise durchdringen, ermöglichen in einfacher Weise, das Laminat von der geschlitzten Seite her betrachtet konkav zu verformen. Dadurch lässt sich das geschlitzte Laminat problemlos in das Schablonengerüst einlegen, wobei das Laminat auf der Aussenseite der ersten Trägerschicht den vom Schablonengerüst definierten, insbesondere dreidimensionalen Oberflächenverlauf des herzustellenden Formteils automatisch einnimmt.

Das einseitige Einbringen der Schlitze in das Laminat erfolgt dabei von der der ersten Trägerschicht gegenüberliegende Seite des Laminats.

Insbesondere wird ermöglicht, dass die erste Trägerschicht in vorteilhafter Weise bereits eine fertige Oberfläche des herzustellenden Formteils bilden kann, da die Schlitze nicht in die erste Trägerschicht eindringen. Hierzu weist die der Schaumstoffschicht gegenüberliegende Seite der ersten Trägerschicht bevorzugt eine im Wesentlichen glatte Oberfläche auf. Zudem wird durch die nicht-geschlitzte erste Trägerschicht das Abdichten des Laminats für das Vakuum-Infusions-Verfahren erleichtert, indem die erste Trägerschicht Teil der Abdichtung für die nach Einlegen in das Schablonengerüst in den Schlitzen verbleibenden Freiräume bildet. Die erste Trägerschicht ist daher fluiddicht, insbesondere gasdicht ausgebildet.

Zudem besteht beim Einlegen des vorbearbeiteten Laminats kein Zeitdruck, da das einzulegende Laminat nicht mit einer Füllmatrix imprägniert ist. Denn im Laminat ist bis zum Vergiessen bzw. bis zum Aufbringen des vorimprägnierten Faser-Matrix-Halbzeuges bzw. des Handlaminats kein aushärtbarer bzw. bereits aushärtender Füllstoff vorhanden.

Bevorzugt bildet das Laminat nach dem Aushärten des Reaktionsharzes und dem Entnehmen aus dem Schablonengerüst das fertig hergestellte Formteil.

Das vorimprägnierte Faser-Matrix-Halbzeug zeichnet sich durch eine gute Verarbeitbarkeit aus und gewährleistet eine gleichmäßige und hohe Qualität des herzustellenden Formteils. Derartige vorimprägnierte Faser-Matrix-Halbzeuge sind auch als sogenannte Prepreg (englische Kurzform für pre-impregnated fibres). Vor dem Aushärten befindet sich die Matrix im teilvernetzten, sogenannten B-Zustand und ist pastös bis fest, kann aber durch Erwärmung wieder verflüssigt werden. Die enthaltenen Fasern können als reine unidirektionale Schicht, als Gewebe oder Gelege vorliegen. Prepreg ist zumeist bahnförmig, auf Rollen gewickelt, verfügbar. Weitere Vorteile solcher Faser-Matrix-Halbzeuge sind ihre niedrige Ondulation und der hohe Faservolumenanteil.

Es kann vorgesehen sein, dass das Laminat ausschliesslich aus der ersten Trägerschicht sowie der darauf angeordneten Schaumstoffschicht besteht. Vorzugsweise ist das erfindungsgemässe Laminat somit ein zweischichtiges Laminat. Das herzustellende Formteil kann daher ausschliesslich aus einem derartigen mit Reaktionsharz vergossenen zweischichtigen Laminat hergestellt sein, insbesondere dann, wenn die verbleidenden Freiräume zwischen den Schlitzen im (vakuum-)Infusionsverfahren vergossen werden. Hierdurch können in vorteilhafter Weise für die Herstellung des Formteils zusätzliche Arbeitsschritte und/oder Bauelemente entfallen. Alternativ kann statt des Vergiessens mit Reaktionsharz auf der geschlitzten Seite der Schaumstoffschicht ein Handlaminant oder ein vorimprägniertes Faser-Matrix-Halbzeug aufgebracht

Gemäss einer vorteilhaften Ausgestaltung der Erfindung kann es aber auch vorgesehen sein, dass das Laminat eine zweite faserverstärkte Trägerschicht aufweist, die mit einer der ersten Seite gegenüberliegenden zweiten Seite der Schaumstoffschicht verbunden ist. In dieser Konfiguration bildet das Laminat ein Sandwichlaminat. Insbesondere kann es vorgesehen sein, dass das Laminat ausschliesslich aus der ersten und zweiten Trägerschicht sowie der dazwischen angeordneten Schaumstoffschicht besteht. Vorzugsweise ist das erfindungsgemässe Laminat somit ein dreischichtiges Laminat. Das herzustellende Formteil kann insoweit ausschliesslich aus dem dreischichtigen Laminat hergestellt sein, wobei zusätzlich auf der zweiten Trägerschicht ein Handlaminant oder ein vorimprägniertes Faser-Matrix-Halbzeug aufgebracht wird oder die in den Schlitzen verbleibenden Freiräume mit aushärtendem Reaktionsharz im (Vakuum-) Infusions-Verfahren vergossen werden. Hierdurch können ebenfalls in vorteilhafter Weise für die Herstellung des Formteils zusätzliche Arbeitsschritte und/oder Bauelemente entfallen.

Ist eine zweite Trägerschicht vorhanden, so erfolgt das Einbringen des einen oder der mehreren nutenförmigen Schlitze in das Laminat gemäss dem vorbestimmten Schlitzmuster so, dass die nutenförmigen Schlitze die zweite Trägerschicht vollständig durchdringen, um das Laminat verformbar zu machen.

Die Faserverstärkung der ersten und zweiten Trägerschicht gewährleitstet in vorteilhafter Weise eine ausreichende Formstabilität und Druckbeständigkeit des herzustellenden Formteils. Vorzugsweise ist es vorgesehen, dass die erste und/oder zweite faserverstärkte Trägerschicht eine faserverstärkte, insbesondere flexible Kunststoffplatte aufweist. Die erste und/oder zweite faserverstärkte Trägerschicht kann insbesondere kohlefaser- und/oder glasfaserverstärkt sein.

Wie die erste Trägerschicht, so kann auch die zweite Trägerschicht vorzugsweise fluiddicht, insbesondere gasdicht ausgebildet sein.

Gemäss einer weiteren vorteilhaften Ausgestaltung der Erfindung kann es vorgesehen sein, dass das Aushärten-Lassen des Reaktionsharzes unter Vakuum erfolgt. Dabei wird vorzugsweise eine fluiddichte Folie auf die der ersten Trägerschicht gegenüberliegende Seite des Laminats, insbesondere - sofern vorhanden - auf die zweite Trägerschicht, bzw. auf das vorimprägnierte Faser-Matrix-Halbzeug bzw. auf das Handlaminat aufgebracht und gegenüber dem Gesamt-Laminat an den freien Kanten des Gesamt-Laminats abgedichtet, d.h. an den freien Kanten des Laminats, des Faser-Matrix-Halbzeugs bzw. des Handlaminats.

Dabei kann die zur Abdichtung verwendete fluiddichte Folie als Teil des herzustellenden Formteils mit dem Laminataufbau verbunden bleiben. Alternativ kann nach dem Aushärten - entweder vor oder nach der Entnahme des ausgehärteten Laminats/Formteils aus dem Schablonengerüst - die fluiddichte Folie vom Laminat gelöst werden. In diesem Fall weist die fluiddichte Folie vorzugsweise ein Trennmittel auf ihrer der zweiten Trägerschicht, dem Handlaminant bzw. dem Faser-Matrix-Halbzeug zugewandten Oberfläche auf, um das Lösen nach dem Aushärten zu erleichtern.

Gemäss einer vorteilhaften Ausgestaltung der Erfindung kann es vorgesehen sein, dass das Laminat in Form mehrerer separater Konstruktionsplatten mit entsprechender Laminat-Struktur bereitgestellt, verformbar gemacht und in das Schablonengerüst eingelegt wird, wobei die mehreren Konstruktionsplatten beim Einlegen in das Schablonengerüst nebeneinander angeordnet und anschliessend - bevorzugt flächenbündig - miteinander verbunden, insbesondere verklebt oder verschweisst werden. Hierdurch wird insbesondere die Herstellung sehr grosser Teile, etwa von Bootsrümpfen, Rotorblättern oder Fassadenelementen, wesentlich vereinfacht.

Bevorzugt werden die Ränder der einzelnen Konstruktionsplatten vor oder nach dem Vorformbarmachen derart zugeschnitten, dass jeweils benachbarte Konstruktionsplatten nach dem Einlegen in das Schablonengerüst wenigstens im Bereich der ersten Trägerschicht abstandsfrei aneinanderstossen. Insbesondere können die Ränder der einzelnen Konstruktionsplatten zumindest bereichsweise bogenförmig zugeschnitten werden. Vorzugsweise erfolgt das Zuschneiden der Ränder computergesteuert. Besonders bevorzugt kann das Zuschneiden der Ränder auf einem CAD-Modell des herzustellenden Formteils basieren.

Die einzelnen Konstruktionsplatten können je nach Grösse des herzustellenden Formteils bis mehrere Meter lang und breit ausgebildet sein. Die jeweilige Grösse und/oder Form der Konstruktionsplatten nach dem Zuschneiden und/oder der Abstand der Stegschablonen entlang der zweiten Richtung ist vorzugsweise so gewählt, dass jede der mehreren Konstruktionsplatten nach dem Einlegen in das Schablonengerüst an der für sie vorbestimmten Position über die Aussenseite der ersten Trägerschicht mit der formgebenden Kontur mehrerer, d.h. wenigstens zweier Stegschablonen in Kontakt gelangt. Dadurch wird erreicht, dass jede Konstruktionsplatte auf der ungeschlitzten Aussenseite der ersten Trägerschicht zwangsweise den vom Schablonengerüst definierten Oberflächenverlauf des herzustellenden Formteils einnimmt.

Bevorzugt werden die Konstruktionsplatten vor dem Einlegen und/oder Zusammenfügen (Verbinden) durch das Einbringen eines oder mehrerer nutenförmiger Schlitzen verformbar gemacht. Grundsätzlich ist aber auch denkbar, dass wenigstens ein Teil der Schlitz nach dem Einlegen eigebracht werden.

Gemäss einer weiteren vorteilhaften Ausgestaltung der Erfindung kann das Schlitzmuster ein Wabenmuster aufweisen. Ein Wabenmuster erlaubt in vorteilhafter Weise eine besonders flexible Verformbarkeit des Laminats bzw. der Konstruktionsplatten.

Denkbar ist aber auch, dass das Schlitzmuster ein Streifenmuster, ein Rautenmuster, ein Rechteckmuster, ein Quadratmuster, ein Dreieckmuster, ein Achteck-Muster, ein Polyeder-Muster oder ein Muster aus mehreren kreisförmigen oder ovalen Schlitzen aufweist. Das Streifenmuster kann beispielsweise mehrere, insbesondere parallel zueinander verlaufende Schlitze aufweisen. Ein derartiges Muster bietet sich grundsätzlich an, wenn das Laminat bzw. die Konstruktionsplatte gemäss dem Oberflächenverlauf des herzustellenden Formteils eine Verformung erfahren soll, die im Wesentlichen einer Krümmung in nur einer Richtung, nämlich senkrecht zur Längserstreckung des Streifenmusters entspricht. Demgegenüber bieten sich Rechteck-, Quadrat-, Dreieck-, Achteck-, Polyeder- oder Wabenmuster insbesondere dann an, wenn das Laminat bzw. die Konstruktionsplatte gemäss dem Oberflächenverlauf des herzustellenden Formteils eine Verformung bzw. Krümmung in zwei Richtungen, insbesondere in zwei zueinander quer oder senkrecht verlaufende Richtungen erfahren soll.

Auch ist denkbar, dass das Schlitzmuster eine beliebige Kombination der zuvor genannten Muster aufweist. Beispielsweise kann das Laminat bzw. eine oder mehrere der Konstruktionsplatten wenigstens einen ersten Bereich mit einem ersten Schlitzmuster und wenigstens einen zweiten Bereich mit einem zweiten Schlitzmuster aufweisen, wobei sich das erste Schlitzmuster von dem zweiten Schlitzmuster unterscheidet. So kann beispielsweise das erste Schlitzmuster im ersten Bereich ein Streifenmuster aus mehreren, insbesondere parallel zueinander verlaufenden Schlitzen aufweisen, um im ersten Bereich eine Verformung in nur einer Richtung senkrecht zur Längserstreckung des Streifenmusters zu ermöglichen. Demgegenüber kann das zweite Schlitzmuster im zweiten Bereich beispielsweise ein Rechteck-, Quadrat- oder ein Wabenmuster aufweisen, um im zweiten Bereich eine Verformung bzw. Krümmung in zwei Richtungen, insbesondere in zwei zueinander quer oder senkrecht verlaufende Richtungen zu ermöglichen.

Nach einer weiteren vorteilhaften Ausgestaltung der Erfindung kann es vorgesehen sein, dass das Schlitzmuster in Abhängigkeit eines Krümmungsverlaufs des herzustellenden Formteils, d.h. je nach Radius der Verformung, Bereiche mit unterschiedlicher lokaler Schlitztiefe, mit unterschiedlicher lokaler Schlitzbreite, mit unterschiedlichem lokalen Schlitzprofil und/oder mit unterschiedlicher lokaler Schlitzdichte aufweist. Hierdurch können zielgerichtet Bereiche unterschiedlicher Verformbarkeit erzeugt werden.

Insbesondere kann es vorgesehen sein, dass das Schlitzmuster, vorzugsweise computerbasiert, derart bestimmt wird, dass eine lokale Schlitzdichte, eine lokale Schlitzform, eine lokale Schlitzbreite und/oder eine lokale Schlitztiefe in solchen Bereichen des Laminats, die eine höhere Verformbarkeit entsprechend einem stärker gekrümmten Oberflächenverlauf des herzustellenden Formteils erfordern, grösser ist als die lokale Schlitzdichte, lokale Schlitzform, lokale Schlitzbreite und/oder lokale Schlitztiefe in anderen Bereichen des Laminats, die eine niedrigere Verformbarkeit entsprechend einem weniger gekrümmten Oberflächenverlauf des herzustellenden Formteils erfordern. Hierdurch kann in vorteilhafter Weise erreicht werden, dass durch geeignete Wahl der Schlitzbreite, Schlitzform, Schlitztiefe und Schlitzdichte gerade nur so viel Schlitzvolumen erzeugt wird, wie für die jeweils erforderliche lokale Verformbarkeit notwendig ist. Dadurch reduziert sich zum einen der technische Aufwand für das Einbringen der nutenförmigen Schlitze. Zum anderen können hierdurch die nach dem Einlegen in das Schablonengerüst in den Schlitzen verbleibenden und gegebenenfalls mit Reaktionsharz zu vergiessenden Freiräume minimiert werden. In vorteilhafter Weise reduziert sich hierdurch die Menge an einzubringendem Reaktionsharz und damit auch die Gesamtmasse des herzustellenden Formteils.

Im Hinblick auf ein Wabenmuster ist es insbesondere möglich, in Bereichen, in denen der Biegeradius klein sein muss, die Waben ebenfalls kleiner zu dimensionieren, sodass eine Verformung der Konstruktionsplatten entsprechend leichter erfolgen kann. In Bereichen, in denen nur eine geringe Verformung notwendig ist, können die einzelnen Waben entsprechend grösser dimensioniert sein und/oder deren Abstände, d.h. Schlitzbreiten, entsprechend geringer gewählt werden.

Um die Menge an gegebenenfalls im Infusionsverfahren einzubringendem Reaktionsharz und damit die Gesamtmasse des herzustellenden Formteils weiter zu reduzieren, kann das Schlitzmuster, insbesondere das lokale Schlitzprofil, die lokale Schlitzdichte, die lokale Schlitzbreite und/oder die lokale Schlitztiefe, gemäss einer weiteren vorteilhaften Ausgestaltung der Erfindung, vorzugsweise computerbasiert, derart bestimmt werden, dass sich das Volumen der durch die Schlitze definierten Freiräume im Laminat nach dem Einlegen in das Schablonengerüst durch Verformen um wenigstens 50%, insbesondere um wenigstens 75%, vorzugsweise um wenigstens 80%, besonderes bevorzugt um wenigstens 90% reduziert. Insbesondere kann das Schlitzmuster, vorzugsweise computerbasiert, derart bestimmt werden, dass sich gegenüberliegenden Flanken der nutenförmigen Schlitze nach dem Einlegen in das Schablonengerüst nahezu oder zumindest bereichsweise berühren.

Nach einer weiteren vorteilhaften Ausgestaltung der Erfindung kann es vorgesehen sein, dass wenigstens ein Teil der Schlitze zumindest vor dem Einlegen in das Schabionengerüst ein V-förmiges oder U-förmiges oder trapezförmiges oder rechteckförmiges Schlitzprofil oder ein Schlitzprofil mit zwei zueinander parallelen Schlitzwänden aufweist. Derartige Profilformen lassen sich in technisch besonders einfacher Weise in das Laminat bzw. die Konstruktionsplatten einbringen. Wie bereits oben beschrieben, kann das Schlitzmuster so ausgebildet sein, dass es Bereiche mit unterschiedlichem lokalen Schlitzprofil aufweist, etwa einen Bereich mit einem V-förmigen Schlitzprofil und einen anderen Bereich mit einem rechtförmigen Schlitzprofil oder einem Schlitzprofil mit zwei zueinander parallelen Schlitzwänden. Gemäss einer weiteren vorteilhaften Ausgestaltung der Erfindung weist die Schaumstoffschicht einen geschlossenporigen Schaumstoff auf oder besteht aus einem geschlossenporigen Schaumstoff. Hierdurch wird verhindert, dass Reaktionsharz in das Innere des Schaumstoffs eindringen kann. In vorteilhafter Weise reduziert sich hierdurch ebenfalls die Menge an gegebenenfalls einzubringendem Reaktionsharz und damit die Gesamtmasse des herzustellenden Formteils. Bevorzugt weist die Schaumstoffschicht einen Hartschaum, insbesondere einen geschlossenporigen Hartschaum, auf oder besteht aus einem Hartschaum, insbesondere einem geschlossenporigen Hartschaum. Hierdurch kann eine ausreichende Formstabilität des herzustellenden Formteils gewährleistet werden.

Das Reaktionsharz ist bevorzugt ein Epoxidharz, Vinylesterharz oder Polyesterharz, insbesondere ein ungesättigter Polyesterharz. Diese Stoffe zeichnen sich durch eine einfache Verarbeitbarkeit und hohe Standzeit aus. Ausserdem eignen sich diese Stoffe besonders für die Vakuum-Infusion.

Gemäss einer der Alternativen der vorliegenden Erfindung können die nach dem Einlegen in den Schlitzen verbleibenden Freiräume mit aushärtendem Reaktionsharz im Vakuum-Infusions-Verfahren vergossen und anschliessend das Reaktionsharz unter Vakuum aushärten gelassen werden. In gleicher Weise kann das Aushärten des Reaktionsharzes bei Verwendung eines vorimprägnierten Faser-Matrix-Halbzeuges bzw. eines Fasergewebe-Reaktionsharz-Handlaminats gemäss der beiden anderen Alternativen der vorliegenden Erfindung unter Vakuum erfolgen. Hierzu wird das in das Schablonengerüst eingelegte Laminat bzw. werden die in das Schablonengerüst eingelegten und miteinander verbundenen Konstruktionsplatten unter einer Folie evakuiert. Dabei wird die Folie auf die der ersten Trägerschicht gegenüberliegende Seite, also etwa auf die zweite Trägerschicht, auf das vorimprägnierte Faser-Matrix-Halbzeug bzw. das Fasergewebe-Reaktionsharz-Handlaminat, aufgelegt und an den Rändern des Gesamt-Konstrukts abgedichtet. An einer oder mehreren Stellen wird eine Vakuumquelle, etwa eine Vakuumpumpe an das abgedichtete Gesamt-Konstrukt angeschlossen.

Für das Vakuum-Infusions-Verfahren wird das abgedichtete Laminat bzw. werden die miteinander verbundenen und abgedichteten Konstruktionsplatten zudem an einer oder mehreren anderen Stellen, die vorzugsweise der einen oder den mehreren Anschlussstellen der Vakuumquelle gegenüberliegen, mit einem Reaktionsharz-Reservoir fluidverbunden. Durch Erzeugen des Vakuums wird das Reaktionsharz somit in die nach dem Einlegen in den Schlitzen verbleibenden Freiräume eingesaugt (Imprägnierung).

Vorzugsweise ist das Schlitzmuster so gewählt, dass mehrere, insbesondere alle Schlitze des Schlitzmusters miteinander in Fluidkommunikation stehen. Hierdurch wird das Vakuum-Infusions-Verfahren deutlich vereinfacht, da die Anzahl der Anschlussstellen für die Vakuumquelle gering gehalten werden kann.

Nach dem vollständigen Vergiessen der verbleibenden Freiräume oder dem Aufbringen des vorimprägnierten Faser-Matrix-Halbzeuges oder dem Aufbringen des Fasergewebe-Reaktionsharz-Handlaminats erfolgt die Aushärtung des Reaktionsharzes. Die Aushärtung kann vorzugsweise bei Raumtemperatur erfolgen und mehrere Stunden, etwa 12 oder 24 Stunden, dauern.

Ein weiterer Aspekt der vorliegenden Erfindung betrifft eine verformbare Konstruktionsplatte zum formlosen Herstellen eines faserverstärkten dreidimensionalen Formteils, insbesondere eines faserverstärkten Bootsrumpfs, Rotorblattes oder Fassadenelements. Die Konstruktionsplatte weist eine Laminat-Struktur auf, die wenigstens eine Schaumstoffschicht und eine erste faserverstärkte und fluiddichte Trägerschicht aufweist. Die erste Trägerschicht ist mit einer ersten Seite der Schaumstoffschicht verbunden. Ferner weist die Konstruktionsplatte einseitig einen oder mehrere Schlitze auf, die ein Schlitzmuster bilden, wobei der eine oder die mehreren Schlitze die Schaumstoffschicht vollständig oder nur teilweise durchdringen, aber nicht in die erste Trägerschicht eindringen.

Die erfindungsgemässe Konstruktionsplatte ist insbesondere zur Durchführung des hierin beschriebenen Fertigungsverfahrens zum formfreien Herstellen eines faserverstärkten dreidimensionalen Formteils mit zumindest bereichsweise gekrümmter Oberfläche, insbesondere eines faserverstärkten Bootsrumpfs, Rotorblattes oder Fassadenelements, geeignet.

Die Konstruktionsplatte kann ausschliesslich aus der ersten faserverstärkten Trägerschicht und der darauf angeordneten Schaumstoffschicht bestehen.

Gemäss einer vorteilhaften Ausgestaltung kann die Konstruktionsplatte bzw. die Laminat-Struktur eine zweite faserverstärkte Trägerschicht aufweisen, die mit einer der ersten Seite gegenüberliegenden zweiten Seite der Schaumstoffschicht verbunden ist. Dieser Aufbau entspricht einem Sandwichlaminat bzw. Sandwichlaminat-Struktur. In dieser Konfiguration durchdringen die nutenförmigen Schlitze die zweite Trägerschicht vollständig.

Vorzugsweise ist die erfindungsgemässe Konstruktionsplatte eine dreischichtige Konstruktionsplatte, die ausschliesslich aus der ersten und zweiten faserverstärkten Trägerschicht und der dazwischen angeordneten Schaumstoffschicht als Kernschicht besteht.

Wie bereits im Zusammenhang mit dem erfindungsgemässen Fertigungsverfahren beschrieben, weist das Schlitzmuster vorzugsweise ein Wabenmuster auf. Ein Wabenmuster erlaubt in vorteilhafter Weise eine besonders flexible Verformbarkeit des Laminats bzw. der Konstruktionsplatten. Denkbar ist aber auch, dass das Schlitzmuster ein Streifenmuster, ein Rautenmuster, ein Rechteckmuster, ein Quadratmuster, ein Dreieckmuster, ein Achteck-Muster, ein Polyeder-Muster oder ein Muster aus mehreren kreisförmigen oder ovalen Schlitzen aufweist. Auch ist denkbar, dass das Schlitzmuster eine beliebige Kombination der zuvor genannten Muster aufweist.

Wie ebenfalls bereits im Rahmen des erfindungsgemässen Fertigungsverfahrens beschrieben, kann es vorgesehen sein, dass das Schlitzmuster Bereiche mit unterschiedlicher lokaler Schlitztiefe, mit unterschiedlicher lokaler Schlitzbreite, mit unterschiedlichem lokalen Schlitzprofil und/oder mit unterschiedlicher lokaler Schlitzdichte aufweist.

Gemäss einer weiteren vorteilhaften Ausgestaltung der Erfindung kann wenigstens ein Teil der Schlitze ein V-förmiges oder U-förmiges oder trapezförmiges oder rechteckförmiges Schlitzprofil oder ein Schlitzprofil mit zwei zueinander parallelen Schlitzwänden aufweisen.

Die Schaumstoffschicht weist vorzugsweise einen geschlossenporigen Schaumstoff auf oder besteht aus einem geschlossenporigen Schaumstoff. Hierdurch kann die Gesamtmasse des aus der Konstruktionsplatte herzustellenden Formteils gering gehalten werden, insbesondere wenn die zwischen den Schlitzen erzeugten Freiräume gegebenenfalls mit Reaktionsharz ausgegossen werden. Denn aufgrund der Geschlossenporigkeit kann später Reaktionsharz nicht in das Innere des Schaumstoffs eindringen. Bevorzugt weist die Schaumstoffschicht einen Hartschaum, insbesondere einen geschlossenporigen Hartschaum, auf oder besteht aus einem Hartschaum, insbesondere einem geschlossenporigen Hartschaum. Hierdurch kann eine ausreichende Formstabilität des herzustellenden Formteils gewährleistet werden.

Gemäss einer weiteren vorteilhaften Ausgestaltung der Erfindung kann die erste und/oder zweite faserverstärkte Trägerschicht eine faserverstärkte flexible Kunststoffplatte umfassen. Die erste und/oder zweite faserverstärkte Trägerschicht kann insbesondere kohlefaser- und/oder glasfaserverstärkt sein.

Weitere Ziele, Vorteile, Merkmale und Anwendungsmöglichkeiten der vorliegenden Erfindung ergeben sich aus der nachfolgenden Beschreibung von Ausführungsbeispielen gemäss der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Fig. 1: ein erstes Ausführungsbeispiel einer erfindungsgemässen Konstruktionsplatte zum formlosen Herstellen eines faserverstärkten Formteils;
- Fig. 2: ein Detailausschnitt der Konstruktionsplatte gemäss Fig. 1 vor dem Verformen;
- Fig. 3: ein Detailausschnitt der Konstruktionsplatte gemäss Fig. 1 nach dem Verformen;
- Fig. 4: ein zweites Ausführungsbeispiel einer erfindungsgemässen Konstruktionsplatte zum formlosen Herstellen eines faserverstärkten Formteils;
- Fig. 5: ein Ausführungsbeispiel eines Schablonengerüsts zum formfreien Herstellen eines dreidimensional geformten Bauteils, vorliegend beispielsweise eines Bootsrumpfs; und
- Fig. 6-9: ein Ausführungsbeispiel eines erfindungsgemässen Verfahrens zum formfreien Herstellen eines Bootsrumpfs.

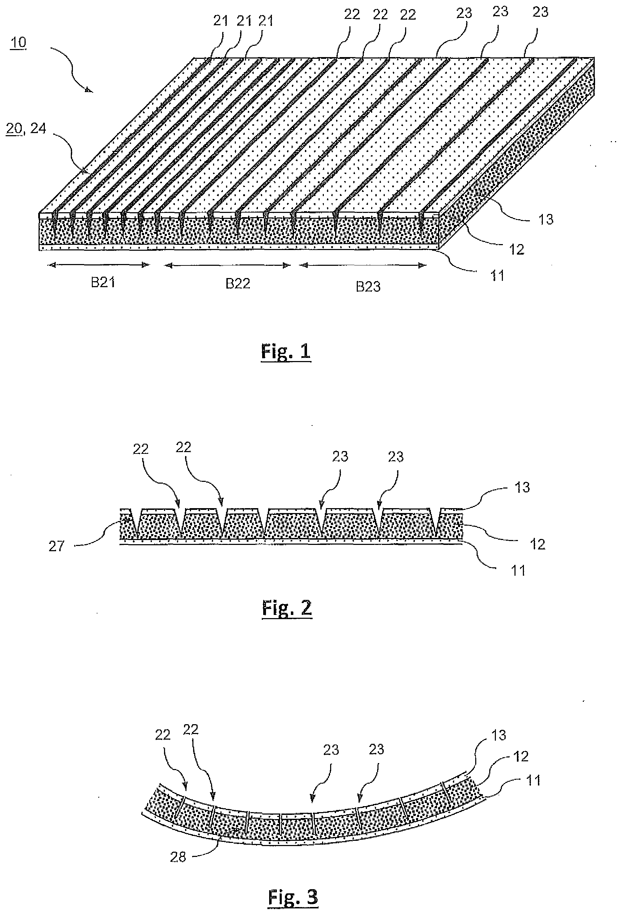

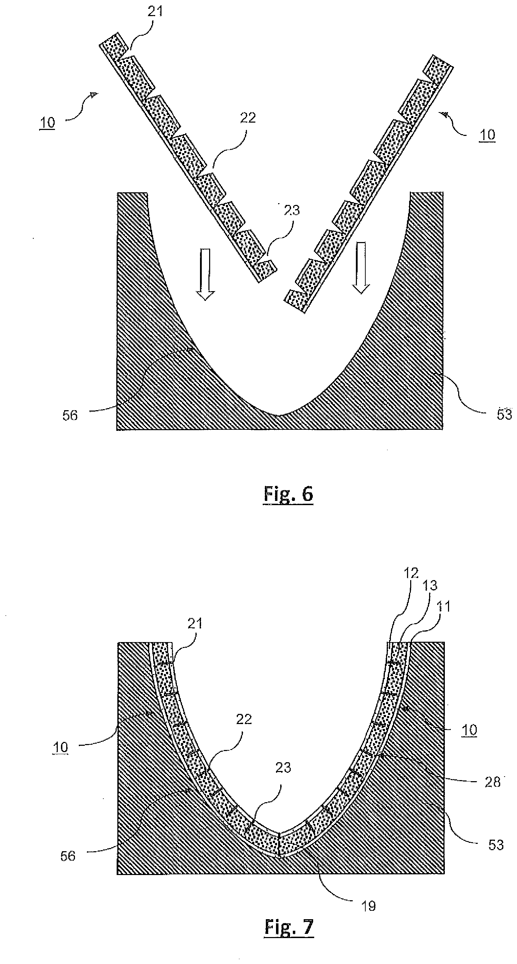

Die Fig. 1-3 zeigen ein erstes Ausführungsbeispiel einer erfindungsgemässen Konstruktionsplatte 10, die Ausgangspunkt für die formlose Herstellung eines faserverstärkten Formteils 1, etwa eines Bootsrumpfes 2 bilden kann (siehe Fig. 6-9). Die Konstruktionsplatte 10 weist eine Laminat-Struktur auf, welche eine Schaumstoffschicht 13, eine erste faserverstärkte Trägerschicht 11 sowie eine zweite faserverstärkte Trägerschicht 12 umfasst. Alternativ ist denkbar, dass die Konstruktionsplatte 10 lediglich die erste faserverstärkte Trägerschicht 11 und die Schaumstoffschicht aufweist, aber keine zweite Trägerschicht.

Im vorliegenden Ausführungsbeispiel besteht die Schaumstoffschicht 13 aus einem geschlossenporigen Hartschaum. Die erste Trägerschicht 11 ist eine flexible glas- oder kohlefaserverstärkte Kunststoffplatte mit einseitig glatter Oberfläche, die vorzugsweise die fertige Aussenoberfläche des herzustellenden Formteils, z.B. Bootsrumpfs bildet. Die der glatten Oberflächen gegenüberliegende Seite der ersten Trägerschicht 11 ist mit einer ersten Seite der geschlossenporigen Schaumstoffschicht 13 unlösbar verbunden. Die zweite Trägerschicht 12 ist ebenfalls eine flexible glas- oder kohlefaserverstärkte Kunststoffplatte, die mit einer zweiten, der ersten Seite gegenüberliegenden Seite der Schaumstoffschicht 13 unlösbar verbunden ist. Die beiden Kunststoffplatten der ersten und zweiten Trägerschicht 11, 12 sind folglich durch die Schaumstoffschicht 13 aus Hartschaum zueinander beabstandet gehalten und bilden anfänglich einen starren Körper.

Um die Konstruktionsplatte 10 zur Herstellung von Formteilen mit zumindest bereichsweise gekrümmter Oberfläche - wie vorliegend etwa zur Herstellung eines Bootsrumpfes - verformbar zumachen, werden gemäss der vorliegenden Erfindung einseitig mehrere z.B. nutenförmige Schlitze 21, 22, 23 in die Konstruktionsplatte 10 eingebracht, beispielsweise eingefräst. Das Einbringen der Schlitze erfolgt nach einem vorbestimmten Schlitzmuster 20, vorzugsweise computergesteuert, insbesondere basierend auf einem CAD-Modell des herzustellenden Formteils, und zwar derart, dass die nutenförmigen Schlitze 21, 22, 23 die zweite Trägerschicht 12 vollständig und die Schaumstoffschicht 13 nur teilweise durchdringen, nicht jedoch nicht in die erste Trägerschicht 11 eindringen.

Im Ausführungsbespiel gemäss den Fig. 1-3 ist das Schlitzmuster 20 ein Streifenmuster 24, das durch die mehreren zueinander parallel verlaufenden Schlitzen 21, 22, 23 gebildet wird. Wie insbesondere Fig. 2 zu entnehmen ist, ist das Schlitzprofil der Schlitze 21, 22, 23 V-förmig, wobei sich jeder Schlitz 21, 22, 23 von der zweiten Trägerschicht 12 ausgehend in Richtung der Schaumstoffschicht 13 zuspitzt. Die derart ausgebildeten Schlitze 21, 22, 23 ermöglichen es, die Konstruktionsplatte 10 von der geschlitzten Seite her betrachtet, d.h. auf der Seite der zweiten Trägerschicht 12 konkav zu verformen. Ein derartiges Streifenmuster 20 bietet sich insbesondere an, wenn die Konstruktionsplatte 10 gemäss dem Oberflächenverlauf des herzustellenden Formteils eine Verformung erfahren soll, die im Wesentlichen einer Krümmung in nur einer Richtung, nämlich senkrecht zur Längserstreckung des Streifenmusters 24 entspricht.

Wie ferner in den Fig. 1-3 gezeigt ist, weist das Schlitzmuster 10 Bereiche B21, B22, B23 unterschiedlicher lokaler Schlitzdichte auf. Im vorliegenden Ausführungsbespiel ist die lokale Dichte der Schlitze 21 im Bereich B21 am grössten und verringert sich stufenweise über den Bereich B22 mit den Schlitzen 22 in den Bereich B23, in dem die lokale Dichte der Schlitze 23 am geringsten ist.

Die variierende Schlitzdichte in den Bereichen B21, B22, B23 ist in Abhängigkeit des Krümmungsverlaufs des herzustellenden Formteils, d.h. je nach Radius der gewünschten Verformung gewählt. Dabei ist in jenen Bereichen, die eine höhere Verformbarkeit entsprechend einem stärker gekrümmten Oberflächenverlauf des herzustellenden Formteils erfordern, die Schlitzdichte grösser ist als in jenen Bereichen, die eine niedrigere Verformbarkeit entsprechend einem weniger gekrümmten Oberflächenverlauf des herzustellenden Formteils erfordern. Gleiches kann auch für die Schlitzbreite und Schlitztiefe gelten.

Vorzugsweise wird das Schlitzmuster 20, insbesondere das lokale Schlitzprofil, die lokale Schlitzdichte, die lokale Schlitzbreite, die lokale Schlitzform und/oder die lokale Schlitztiefe derart bestimmt, dass sich - wie in Fig. 3 gezeigt - das Volumen der durch die Schlitze definierten Freiräume 28 nach dem Verformen um wenigstens 50% reduziert. Bevorzugt erfolgt die Wahl des Schlitzmusters 20 so, dass sich gegenüberliegende Flanken der nutenförmigen Schlitze 21, 22, 23 nach dem Verformen nahezu berühren oder sogar zumindest bereichsweise berühren.

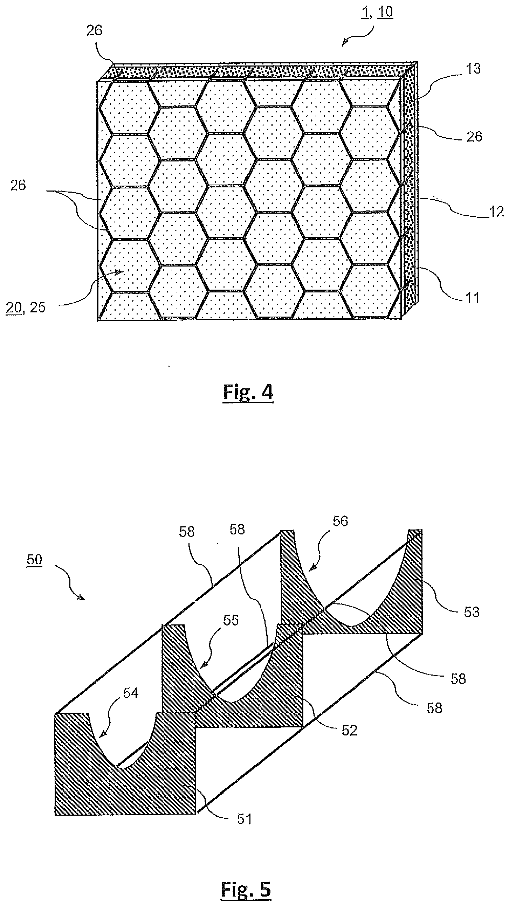

Fig. 4 zeigt ein zweites Ausführungsbespiel der erfindungsgemässen Konstruktionsplatte 10. Die dort gezeigte Konstruktionsplatte 10 weist die gleiche Laminat-Struktur auf wie die Konstruktionsplatte 10 gemäss den Fig. 1-3. Gleiche oder ähnliche Merkmale sind daher mit identischen Bezugszeichen versehen. Im Unterschied zur Konstruktionsplatte 10 gemäss den Fig. 1-3 weist das Schlitzmuster 20 der Konstruktionsplatte 10 gemäss Fig. 4 ein Wabenmuster 25 auf, bei dem nach Einbringen der Schlitze 26 in die zweite Trägerschicht 12 und einen Teil der Schaumstoffschicht 13 sechseckige Körper gebildet werden, die über die erste Trägerschicht 11 und den ungeschlitzten Teil der Schaumstoffschicht 13 miteinander verbunden sind. Das Wabenmuster 25 erlaubt eine besonders flexible Verformbarkeit der Konstruktionsplatte 10. Das Wabenmuster 25 bietet sich insbesondere an, wenn die Konstruktionsplatte 10 bzw. ein daraus zusammengesetztes Laminat gemäss dem Oberflächenverlauf des herzustellenden Formteils eine Verformung bzw. Krümmung in zwei Richtungen, insbesondere in zwei zueinander quer verlaufende Richtungen erfahren soll.

Anhand der Fig. 5-9 wird nachfolgend ein Ausführungsbeispiel des erfindungsgemässen Verfahrens zum formfreien Herstellen eines faserverstärkten Formteils 1 mit zumindest bereichsweise gekrümmter Oberfläche am Beispiel eines herzustellenden Bootsrumpfs 2 erläutert. Ausgangspunkt des Verfahrens bilden mehrere Konstruktionsplatten 10, die die zuvor erläuterte Laminat-Struktur aufweisen und in die gemäss dem erfindungsgemässen Verfahren ein Schlitzmuster, etwa ein Streifenmuster 24 wie in den Fig. 1-3 gezeigt oder ein Wabenmuster 25 wie in Fig. 4 gezeigt eingebracht wird. Dabei werden, wie zuvor erläutert, das Schlitzmuster 20, die Schlitzdichte, Schlitzform, Schlitzbreite und/oder Schlitztiefe in Abhängigkeit des Krümmungsverlaufs des herzustellenden Bootsrumpfes lokal jeweils so gewählt, dass jede der Konstruktionsplatten 10 an dem für sie vorgesehenen Verwendungsort im Bootsrumpf 2 eine an den lokalen Krümmungsverlaufs des herzustellenden Bootsrumpfes 2 angepasste Verformbarkeit aufweist. Das Bestimmen und Einbringen der jeweiligen Schlitzmuster 20, 24, 25 erfolgt vorzugsweise computerbasiert anhand eines CAD-Modells des herzustellenden Bootsrumpfes 2.

Die so vorbereiteten Konstruktionsplatten 10 werden gemäss der Erfindung anschliessend in ein negatives Schablonengerüst 50, auch negatives Mallengerüst genannt, eingelegt. Wie in Fig. 5, allerdings nur schematisch und ausschnittsweise gezeigt, umfasst das Schabionengerüst 50 mehrere Stegschablonen 51, 52, 53, auch Mallen genannt. Diese sind entlang einer ersten Richtung, vorliegend entsprechend der Quererstreckung des herzustellenden Bootsrumpfes 2, ausgerichtet und voneinander beabstandet an einer jeweiligen Längsposition entlang einer zweiten Richtung, vorliegend entlang der Längserstreckung des herzustellenden Bootsrumpfes 2, d.h. senkrecht zur ersten Richtung, angeordnet.

Der Abstand zwischen jeweils zwei benachbarten Stegschablonen 51, 52 53 kann je nach Grösse des herzustellenden Formteils wenigen Zentimeter bis einige Meter betragen, beispielsweise 30 cm, 40 cm oder 50 cm. Der Abstand entlang der Längserstreckung des herzustellenden Bootsrumpfes 2 kann je nach Krümmungsverlauf variieren. Jede Steg-Schablone 51, 52, 53 weist eine formgebende Kontur 54, 55, 56 auf, die zumindest bereichsweise einem Querschnittsprofil des herzustellenden Bootsrumpfes 2 entlang der ersten Richtung an der jeweiligen Längsposition entspricht, so dass die Konturen 54, 55, 56 der Steg-Schablonen 51, 52, 53 in ihrer Abfolge im Schablonengerüst 50 einen Oberflächenverlauf des herzustellenden Bootsrumpfes 2 nachbilden. Die Steg-Schablonen 51, 52, 53 können anhand eines CAD-Modells für jede beliebige Stelle des Bootsrumpfs 2 entlang dessen Längserstreckung leicht berechnet und beispielsweise CAD-basiert mithilfe einer Fräse oder Säge oder eines Laserschneidgeräts ausgeschnitten werden. Ein derartiges Schablonengerüst 50 ist sehr kostengünstig aus preisgünstiger Spanplatte herstellbar und benötigt, falls ein weiterer Bootsbau erfolgen soll, bis zum erneuten Gebrauch nur wenig Stauraum. Die einzelnen Steg-Schablonen 51, 52, 53 können aus einer rechteckigen Platte hergestellt werden, die am Boden und jeweils an den beiden oberen Enden über Latten 58 miteinander verbunden werden.

In dieses Schablonengerüst 50 können nun die mit Schlitzen versehenen Konstruktionsplatten 10 eingelegt werden (vgl. Fig. 6). Das Einlegen der vorbearbeiteten Konstruktionsplatten 10 ist sehr einfach. Insbesondere besteht kein Zeitdruck, da vorab kein aushärtbarer Füllstoff in den Konstruktionsplatten 10 vorhanden ist. Die einzelnen Platten 10 mit dem beispielsweise streifen- oder wabenförmigen Schlitzmuster können je nach Grösse des Boots bis mehrere Meter lang und breit ausgebildet sein. Da die gesamte Form bzw. Fläche des herzustellenden Formteils aus dem vorhandenen CAD-Modell bekannt ist, können die Ränder, d.h. die Längs- und Breitenkanten, der Konstruktionsplatten 10 vor oder nach dem Vorformbarmachen, vorzugsweise computergesteuert, derart zugeschnitten werden, dass jeweils benachbarte Konstruktionsplatten 10 nach dem Einlegen in das Schablonengerüst 50 wenigstens im Bereich der ersten Trägerschicht 11, vorzugsweise über alle Schichten 11, 12, 13 hinweg, abstandsfrei aneinanderstossen. Die Ränder der Konstruktionsplatten 10 können insbesondere bogenförmig zugeschnitten sein. Jede Konstruktionsplatte 10 ist nach dem Einlagen jeweils durch mehrere Stegschablonen 51, 52, 53 gestützt, so dass jede Konstruktionsplatte 10 an der jeweiligen Aussenfläche der nicht geschlitzten Trägerschicht 11 zwangsläufig die geplante Rumpfform entsprechend der jeweiligen formgebenden Kontur 54, 55, 56 der Stegschablonen 51, 52, 53 annimmt.

An den Stossstellen 19 zwischen den einzelnen Konstruktionsplatten 10 werden diese, vorzugsweise flächenbündig, miteinander verklebt. Fig. 7 zeigt den Zustand nach dem Einlegen und Verbinden der Konstruktionsplatten 10. Im Vergleich zu Fig. 6 ist deutlich zu erkennen, dass sich die gegenüberliegenden Flanken der Schlitze 21, 22, 23 nach dem Einlegen in das Schablonengerüst 50 nahezu berühren, insbesondere dass sich das Volumen der durch die Schlitze 21, 22, 23 definierten Freiräume 28 nach dem Einlegen in das Schablonengerüst deutlich reduziert hat, wenigstens um 50%.

Nach dem Einlegen und Verbinden der Konstruktionsplatten 10 bilden diese ein Laminat 5. Alternativ kann das Laminat 5 bereits vor dem Einlegen und Einbringen der Schlitze als einstückiges Laminat vorliegen. Bevorzugt wird das Laminat 5 jedoch - wie zuvor beschrieben - in Form mehrerer separater Konstruktionsplatten 10 mit entsprechender Laminat-Struktur bereitgestellt, verformbar gemacht und in das Schablonengerüst 50 eingelegt, wobei die mehreren Konstruktionsplatten 10 in das Schablonengerüst 50 nebeneinander angeordnet und miteinander verbunden, insbesondere verklebt oder verschweisst werden.

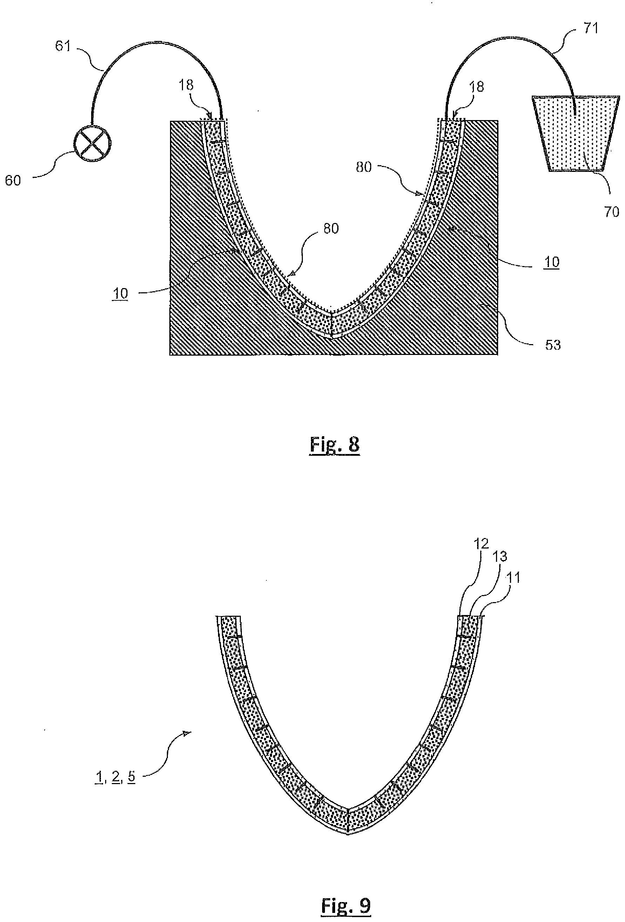

Nach dem Einlegen und Verbinden der Konstruktionsplatten 10 werden - wie in Fig. 8 in einer Querschnittsansicht schematisch darstellt - die in den Schlitzen 21, 22, 23 verbleibenden Freiräume im vorliegenden Ausführungsbeispiel im Vakuum-Infusions-Verfahren mit einem aushärtenden Reaktionsharz vergossen. Hierzu wird auf der Innenseite des herzustellenden Bootsrumpfs 2, d.h. auf der freiliegenden Seite der zweiten Trägerschicht 12 eine Kunststofffolie 80 aufgelegt und an den oberen freien Kanten 18 im Bereich der Latten 58, welche die Stegschablonen 51, 52, 53 miteinander verbinden, abgedichtet. Die Folie 80 wird in Längsrichtung des zu erstellenden Bootrumpfes 2 an einer der beiden Längskanten, vorzugsweise über einer Mehrzahl von Schläuchen 61 mit einer Vakuumpumpe 60 verbunden. Auf der gegenüberliegenden Seite werden ebenfalls Schläuche 71 in den Zwischenraum zwischen der Folie 80 und der mit Schlitzen versehenen Innenseite der Konstruktionsplatte 10 bzw. des Laminats 5 geführt. Das andere Ende der Schläuche 71 taucht in einen Behälter 70 mit flüssigem Reaktionsharz, etwa Epoxidharz, Vinylesterharz oder ungesättigter Polyesterharz, ein. Mit Einschalten der Vakuumpumpe 60 erfolgt das Evakuieren des Zwischenraums zwischen den einseitig geschlitzten Konstruktionsplatten 10 bzw. dem einseitig geschlitzten Laminats 5 und der Folie 80. Hierdurch wird flüssiger Kunststoff über die Schläuche 71 in diesen Zwischenraum eingeleitet und durch die Schlitze im gesamten Rumpf 2 hindurch an die Gegenseite geführt, bis auch dort flüssiger Kunststoff angelangt ist.

Das eingeführte flüssige Reaktionsharz durchdringt die Schlitze, kann aber nicht das Material der Schaumstoffschicht eindringen, da diese geschlossenporig ist. Folglich wird nur eine minimale Menge an flüssigem Kunststoff benötigt, um die verformten Konstruktionsplatten 10 bzw. das verformte Laminats 5 nach dem Aushärten zusammenzuhalten. Die eingebrachte Kunststoffmenge ist sehr gering und folglich der Rumpf 2 sehr leicht.

Alternativ zum Vakuum-Infusions-Verfahren kann auf die der ersten Trägerschicht 11 gegenüberliegende Seite des Laminats 5 ein mit Reaktionsharz vorimprägniertes Faser-Matrix-Halbzeug oder ein Fasergewebe-Reaktionsharz-Handlaminat aufgebracht werden und anschliessend das Reaktionsharz aushärten gelassen werden. Das Aushärten kann ebenfalls wie beim Vakuum-Infusions-Verfahren unter Vakuum erfolgen. Herzu kann ebenfalls eine Folie - wie beim Vakuum-Infusions-Verfahren beschrieben - zum Einsatz kommen.

Nach dem Aushärten des Reaktionsharzes, beispielsweise nach 12 oder 24 Stunden, kann das Vakuum aufgehoben und die Kunststofffolie 80 aus dem nun erstellten Rumpf 2 entfernt werden. Die Aussenseite des Rumpfs ist durch die Aussenseite der ersten Trägerschicht 11 gebildet und im Wesentlichen bereits völlig glatt. Auch die Innenseite benötigt, wenn überhaupt, wenig Aufwand zur Oberflächenglättung.

Fig. 9 zeigt den fertigen Bootsrumpf 2 in einer Querschnittsansicht nach der Entnahme aus Schablonengerüst. In den derart erzeugten Bootsrumpf 2 können, vorzugsweise vor der Entnahme aus dem Schablonengerüst, dort wo notwendig, Schotten eingefügt werden, um den Bootsrumpf 2 bis zum Aufsetzen des Decks oder später für die Befestigung von Wanten und dergleichen in Form zu halten.

Selbstverständlich lassen sich nicht nur Bootsrümpfe, sondern auch beliebige andere dreidimensionale Formen in der beschriebenen Weise herstellen.

## Patentansprüche

1. Fertigungsverfahren zum formfreien Herstellen eines faserverstärkten dreidimensionalen Formteils (1) mit zumindest bereichsweise gekrümmter Oberfläche, insbesondere eines Bootsrumpfs (2), Rotorblattes oder Fassadenelements, wobei das Verfahren
das Bereitstellen eines Schablonengerüsts (50) umfasst, insbesondere eines negativen Mallengerüsts, mit mehreren Stegschablonen (51, 52, 53), die entlang einer ersten Richtung ausgerichtet und voneinander beabstandet an einer jeweiligen Längsposition entlang einer zur ersten Richtung senkrecht verlaufenden zweiten Richtung angeordneten sind, wobei jede Stegschablone (51, 52, 53) eine formgebende Kontur (54, 55, 56) aufweist, die zumindest bereichsweise einem Querschnittsprofil des herzustellenden Formteils (1) entlang der ersten Richtung an der jeweiligen Längsposition entspricht, so dass die Konturen (54, 55, 56) der Steg-Schablonen (51, 52, 53) in ihrer Abfolge im Schablonengerüst (50) einen Oberflächenverlauf des herzustellenden Formteils (1) nachbilden,
wobei das Fertigungsverfahren die folgenden Schritte umfasst:
- Bereitstellen eines Laminats (5), das wenigstens eine Schaumstoffschicht (13) und eine erste faserverstärkte und fluiddichte Trägerschicht (11) aufweist, wobei die erste Trägerschicht mit einer ersten Seite der Schaumstoffschicht (13) verbunden ist;
- Verformbarmachen des Laminats (5) durch einseitiges, vorzugsweise computergesteuertes Einbringen eines oder mehrerer Schlitze (21, 22, 23, 26) in das Laminat (5) gemäss einem vorbestimmten Schlitzmuster (20), wobei der eine oder die mehreren Schlitze (21, 22, 23, 26) die Schaumstoffschicht (13) vollständig oder nur teilweise durchdringen, aber nicht in die erste Trägerschicht (11) eindringen;
- Einlegen des verformbar gemachten Laminats (5) in das Schablonengerüst (50), wobei die erste Trägerschicht (11) mit ihrer Ausseiten mit den formgebenden Konturen (54, 55, 56) der Stegschablonen (51, 52, 53) in Kontakt gelangt, so dass das Laminat (5) auf der Aussenseite der ersten Trägerschicht (11) den vom Schablonengerüst (50) definierten Oberflächenverlauf des herzustellenden Formteils (1) einnimmt;
- Vergießen der nach Einlegen in das Schablonengerüst (50) in den Schlitzen (21, 22, 23, 26) verbleibenden Freiräume (28) mit Reaktionsharz im Infusions-Verfahren, insbesondere im Vakuum-Infusions-Verfahren, oder Aufbringen eines mit Reaktionsharz vorimprägnierten Faser-Matrix-Halbzeuges auf die der ersten Trägerschicht (11) gegenüberliegende Seite des Laminats (5) oder Aufbringen eines Fasergewebe-Reaktionsharz-Handlaminats auf die der ersten Trägerschicht (11) gegenüberliegende Seite des Laminats (5);
- Aushärten-Lassen des Reaktionsharzes;
- Entnehmen des so erhaltenen Formteils (1) aus dem Schablonengerüst (50) nach dem Aushärten des Reaktionsharzes.

2. Verfahren nach Anspruch 1, **dadurch gekennzeichnet, dass** das Laminat eine zweite faserverstärkte Trägerschicht (12) aufweist, die mit einer der ersten Seite gegenüberliegenden zweiten Seite der Schaumstoffschicht (13) verbunden ist, und wobei das Einbringen des einen oder der mehreren Schlitze (21, 22, 23, 26) in das Laminat (5) gemäss dem vorbestimmten Schlitzmuster (20) so erfolgt, dass die Schlitze (21, 22, 23, 26) die zweite Trägerschicht (12) vollständig durchdringen.

3. Verfahren nach Anspruch 1 oder 2, **dadurch gekennzeichnet, dass** das Aushärten-Lassen des Reaktionsharzes unter Vakuum erfolgt, wobei eine fluiddichte Folie (80) auf die der ersten Trägerschicht (11) gegenüberliegende Seite des Laminats (5) bzw. auf das vorimprägnierte Faser-Matrix-Halbzeug bzw. auf das Handlaminat aufgebracht und gegenüber dem Laminat (5) an den freien Kanten (18) des Laminats (5) bzw. des Faser-Matrix-Halbzeugs bzw. des Handlaminats abgedichtet wird.

4. Verfahren nach einem der vorhergehenden Ansprüche **dadurch gekennzeichnet, dass** das Laminat (5) in Form mehrerer separater Konstruktionsplatten (10) mit entsprechender Laminat-Struktur bereitgestellt, verformbar gemacht und in das Schablonengerüst (50) eingelegt wird, wobei die mehreren Konstruktionsplatten (10) beim Einlegen in das Schabionengerüst (50) nebeneinander angeordnet und miteinander verbunden, insbesondere verklebt oder verschweisst werden.

5. Verfahren nach Anspruch 4, **dadurch gekennzeichnet, dass** die Ränder der Konstruktionsplatten (10) vor oder nach dem Vorformbarmachen, vorzugsweise computergesteuert, derart zugeschnitten werden, dass jeweils benachbarte Konstruktionsplatten (10) nach dem Einlegen in das Schablonengerüst (50) wenigstens im Bereich der ersten Trägerschicht (11) abstandsfrei aneinanderstossen.

6. Verfahren nach einem der vorhergehendenden Ansprüche, **dadurch gekennzeichnet, dass** das Schlitzmuster (20) ein Wabenmuster (25) aufweist.

7. Verfahren nach einem der vorhergehendenden Ansprüche, **dadurch gekennzeichnet, dass** das Schlitzmuster (20) in Abhängigkeit eines Krümmungsverlaufs des herzustellenden Formteils (1) Bereiche mit unterschiedlicher lokaler Schlitztiefe, mit unterschiedlicher lokaler Schlitzbreite, mit unterschiedlichem lokalen Schlitzprofil und/oder Schlitzform und/oder mit unterschiedlicher lokaler Schlitzdichte aufweist.

8. Verfahren nach einem der vorhergehendenden Ansprüche, **dadurch gekennzeichnet, dass** das Schlitzmuster (20), vorzugsweise computerbasiert, derart bestimmt wird, dass eine lokale Schlitzdichte, Schlitzform, Schlitzbreite und/oder Schlitztiefe in Bereichen des Laminats (5), die eine höhere Verformbarkeit entsprechend einem stärker gekrümmten Oberflächenverlauf des herzustellenden Formteils (1) erfordern, grösser ist als eine lokale Schlitzdichte, Schlitzform, Schlitzbreite und/oder Schlitztiefe in Bereichen des Laminats (5), die eine niedrigere Verformbarkeit entsprechend einem weniger gekrümmten Oberflächenverlauf des herzustellenden Formteils erfordern.

9. Verfahren nach einem der vorhergehendenden Ansprüche, **dadurch gekennzeichnet, dass** das Schlitzmuster (20), insbesondere ein lokales Schlitzprofil, eine lokale Schlitzform, eine lokale Schlitzdichte, eine lokale Schlitzbreite und/oder eine lokale Schlitztiefe, vorzugsweise computerbasiert, derart bestimmt wird, dass sich gegenüberliegenden Flanken der nutenförmigen Schlitze (21, 22, 23, 26) nach dem Einlegen in das Schablonengerüst (50) zumindest bereichsweise berühren und/oder dass sich das Volumen der durch die Schlitze (21, 22, 23, 26) definierten Freiräume (28) im Laminat (5) nach dem Einlegen in das Schablonengerüst (50) durch Verformen um wenigstens 50% reduziert.

10. Verfahren nach einem der vorhergehendenden Ansprüche, **dadurch gekennzeichnet, dass** wenigstens ein Teil der Schlitze (21, 22, 23, 26) zumindest vor dem Einlegen in das Schablonengerüst (50) ein V-förmiges oder trapezförmiges oder rechteckförmiges Schlitzprofil oder ein Schlitzprofil mit zwei zueinander parallelen Schlitzwänden aufweist.

11. Verfahren nach einem der vorhergehendenden Ansprüche, **dadurch gekennzeichnet, dass** die Schaumstoffschicht (13) einen geschlossenporigen Schaumstoff, einen Hartschaum oder einen geschlossenporigen Hartschaum aufweist.

12. Verfahren nach einem der vorhergehendenden Ansprüche, **dadurch gekennzeichnet, dass** die erste Trägerschicht (11) und/oder die zweite Trägerschicht (12) eine faserverstärkte Kunststoffplatte aufweist.

13. Verformbare Konstruktionsplatte (10) zum formlosen Herstellen eines faserverstärkten dreidimensionalen Formteils (1), insbesondere eines Bootsrumpfs (2), Rotorblattes oder Fassadenelements, wobei die Konstruktionsplatte (10) eine Laminat-Struktur aufweist, die wenigstens eine Schaumstoffschicht (13) und eine erste faserverstärkte Trägerschicht (11) aufweist, wobei die erste Trägerschicht mit einer ersten Seite der Schaumstoffschicht (13) verbunden ist und die Konstruktionsplatte (10) einseitig einen oder mehrere Schlitze (21, 22, 23, 26) aufweist, die ein Schlitzmuster (20) bilden, wobei der eine oder die mehreren Schlitze (21, 22, 23, 26) die Schaumstoffschicht (13) vollständig oder nur teilweise durchdringen, aber nicht in die erste Trägerschicht (11) eindringen und wobei die erste faserverstärkte Trägerschicht (11) fluiddicht ist.

14. Konstruktionsplatte (10) nach Anspruch 13, **dadurch gekennzeichnet, dass** die Laminat-Struktur eine zweite faserverstärkte Trägerschicht (12) aufweist, die mit einer der ersten Seite gegenüberliegenden zweiten Seite der Schaumstoffschicht (13) verbunden ist, und wobei die Schlitze (21, 22, 23, 26) die zweite Trägerschicht (12) vollständig durchdringen.

15. Konstruktionsplatte (10) nach Anspruch 13 oder 14, **dadurch gekennzeichnet, dass** das Schlitzmuster (20) ein Wabenmuster (25) aufweist;

16. Konstruktionsplatte (10) nach einem der Ansprüche 13 bis 15, **dadurch gekennzeichnet, dass** das Schlitzmuster (20) Bereiche mit unterschiedlicher lokaler Schlitztiefe, mit unterschiedlicher lokaler Schlitzbreite, mit unterschiedlichem lokalen Schlitzprofil und/oder mit unterschiedlicher lokaler Schlitzdichte aufweist.

17. Konstruktionsplatte (10) nach einem der Ansprüche 13 bis 16, **dadurch gekennzeichnet, dass** wenigstens ein Teil der Schlitze (21, 22, 23, 26) ein V-förmiges oder trapezförmiges oder rechteckförmiges Schlitzprofil oder ein Schlitzprofil mit zwei zueinander parallelen Schlitzwänden aufweist.

18. Konstruktionsplatte (10) nach einem der Ansprüche 13 bis 17, **dadurch gekennzeichnet, dass** der Schaumstoff der Schaumstoffschicht (13) geschlossenporig ist und/oder ein Hartschaum ist.

19. Konstruktionsplatte (10) nach einem der Ansprüche 13 bis 18, **dadurch gekennzeichnet, dass** die erste Trägerschicht (11) und/oder zweite Trägerschicht (12) eine faserverstärkte Kunststoffplatte aufweist.

## Claims

1. A manufacturing method for the mold-free production of a fiber-reinforced three-dimensional molded part (1) having a surface that is curved at least in regions, in particular a boat's hull (2), rotor blade or façade element, wherein the method comprises
providing a template framework (50), in particular a negative mold framework, comprising a plurality of partition templates (51, 52, 53) that are oriented in a first direction and are arranged so as to be spaced apart from one another in a relevant longitudinal position in a second direction extending perpendicularly to the first direction, wherein each partition template (51, 52, 53) has a shaping contour (54, 55, 56) which corresponds, at least in regions, to a cross-sectional profile of the molded part (1) to be produced in the first direction in the relevant longitudinal position, such that the contours (54, 55, 56) of the partition templates (51, 52, 53) recreate a surface shape of the molded part (1) to be produced in their sequence in the template framework (50),
wherein the manufacturing method comprises the following steps:
- providing a laminate (5) which has at least one foam layer (13) and one first fiber-reinforced and fluid-tight carrier layer (11), wherein the first carrier layer is connected to a first side of the foam layer (13);
- rendering the laminate (5) deformable by making one or more grooves (21, 22, 23, 26) in the laminate (5) on one side, preferably in a computer-controlled manner, in accordance with a predetermined groove pattern (20), wherein the one or more grooves (21, 22, 23, 26) completely or only partially penetrate the foam layer (13), but do not penetrate the first carrier layer (11);
- laying the laminate (5), which has been rendered deformable, into the template framework (50), wherein the first carrier layer (11) comes into contact with the shaping contours (54, 55, 56) of the partition templates (51, 52, 53) by its outer faces such that the laminate (5) takes on the surface shape of the molded part (1) to be produced, as defined by the template framework (50), on the outer face of the first carrier layer (11);
- filling the open spaces (28) remaining in the grooves (21, 22, 23, 26) once said laminate has been laid into the template framework (50) with reaction resin in an infusion process, in particular in a vacuum infusion process, or applying a fiber-matrix semi-finished product pre-impregnated with reaction resin to the side of the laminate (5) opposite the first carrier layer (11), or applying a fibrous-tissue reaction-resin hand lay-up laminate to the side of the laminate (5) opposite the first carrier layer (11);
- allowing the reaction resin to cure;
- removing the molded part (1) thus obtained from the template framework (50) after the reaction resin has cured.

2. The method according to Claim 1, **characterized in that** the laminate has a second fiber-reinforced carrier layer (12) which is connected to a second side of the foam layer (13) opposite the first side, and wherein the one or more grooves (21, 22, 23, 26) are made in the laminate (5) in accordance with the predetermined groove pattern (20) such that the grooves (21, 22, 23, 26) completely penetrate the second carrier layer (12).

3. The method according to Claim 1 or 2, **characterized in that** the reaction resin is allowed to cure under vacuum, wherein a fluid-tight film (80) is applied to the side of the laminate (5) opposite the first carrier layer (11) or to the pre-impregnated fiber-matrix semi-finished product or to the hand lay-up laminate and is sealed from the laminate (5) at the free edges (18) of the laminate (5) or the fiber-matrix semi-finished product or the hand lay-up laminate.

4. The method according to any of the preceding claims, **characterized in that** the laminate (5) is provided in the form of a plurality of separate structural panels (10) having a corresponding laminate structure, is rendered deformable, and is laid into the template framework (50), wherein the plurality of structural panels (10) are arranged beside one another when they are laid into the template framework (50) and are interconnected, in particular bonded or welded.

5. The method according to Claim 4, **characterized in that** the edges of the structural panels (10) are cut to size, before or after said panels are rendered deformable, preferably in a computer-controlled manner, such that adjacent structural panels (10) abut one another without any spacing at least in the region of the first carrier layer (11) after being laid into the template framework (50).

6. The method according to any of the preceding claims, **characterized in that** the groove pattern (20) has a honeycomb pattern (25).

7. The method according to any of the preceding claims, **characterized in that** the groove pattern (20) has regions having a different local groove depth, a different local groove width, a different local groove profile, and/or groove shape, and/or a different local groove density, depending on a curvature of the molded part (1) to be produced.

8. The method according to any of the preceding claims, **characterized in that** the groove pattern (20) is determined, preferably in a computer-based manner, such that a local groove density, groove shape, groove width, and/or groove depth is greater in regions of the laminate (5) requiring greater deformability corresponding to a more heavily curved surface shape of the molded part (1) to be produced than a local groove density, groove shape, groove width, and/or groove depth in regions of the laminate (5) requiring less deformability corresponding to a less curved surface shape of the molded part to be produced.

9. The method according to any of the preceding claims, **characterized in that** the groove pattern (20), in particular a local groove shape, a local groove density, a local groove width, and/or a local groove depth is determined, preferably in a computer-based manner, such that opposite sides of the channel-shaped grooves (21, 22, 23, 26) are in contact at least in regions after the laminate is laid into the template framework (50) and/or such that the volume of the open spaces (28) in the laminate (5) defined by the grooves (21, 22, 23, 26) is reduced by at least 50% by deformation after the laminate is laid into the template framework (50).

10. The method according to any of the preceding claims, **characterized in that** at least some of the grooves (21, 22, 23, 26) have a V-shaped, trapezoidal, or rectangular groove profile or a groove profile having two parallel groove walls, at least before the laminate is laid into the template framework (50).

11. The method according to any of the preceding claims, **characterized in that** the foam layer (13) has a closed-cell foam, a rigid foam, or a closed-cell rigid foam.

12. The method according to any of the preceding claims, **characterized in that** the first carrier layer (11) and/or the second carrier layer (12) has a fiber-reinforced plastics panel.

13. A deformable structural panel (10) for the mold-free production of a fiber-reinforced three-dimensional molded part (1), in particular a boat's hull (2), rotor blade or façade element, wherein the structural panel (10) has a laminate structure which has at least one foam layer (13) and one first fiber-reinforced carrier layer (11), wherein the first carrier layer is connected to a first side of the foam layer (13) and the structural panel (10) has one or more grooves (21, 22, 23, 26) on one side which form a groove pattern (20), wherein the one or more grooves (21, 22, 23, 26) completely or only partially penetrate the foam layer (13), but do not penetrate the first carrier layer (11), and wherein the first fiber-reinforced carrier layer (11) is fluid-tight.

14. The structural panel (10) according to Claim 13, **characterized in that** the laminate structure has a second fiber-reinforced carrier layer (12) which is connected to a second side of the foam layer (13) opposite the first side, and wherein the grooves (21, 22, 23, 26) completely penetrate the second carrier layer (12).

15. The structural panel (10) according to Claim 13 or 14, **characterized in that** the groove pattern (20) has a honeycomb pattern (25).

16. The structural panel (10) according to any of Claims 13 to 15, **characterized in that** the groove pattern (20) has regions having a different local groove depth, a different local groove width, a different local groove profile, and/or a different local groove density.

17. The structural panel (10) according to any of Claims 13 to 16, **characterized in that** at least some of the grooves (21, 22, 23, 26) have a V-shaped, trapezoidal, or rectangular groove profile or a groove profile having two parallel groove walls.

18. The structural panel (10) according to any of Claims 13 to 17, **characterized in that** the foam of the foam layer (13) is closed-cell and/or is a rigid foam.

19. The structural panel (10) according to any of Claims 13 to 18, **characterized in that** the first carrier layer (11) and/or second carrier layer (12) has a fiber-reinforced plastics panel.

## Revendications

1. Procédé de fabrication pour la production sans moule d'une pièce tridimensionnelle renforcée par des fibres (1) ayant une surface au moins partiellement incurvée, en particulier d'une coque de bateau (2), d'une pale de rotor ou d'un élément de façade, ledit procédé comprenant
la fourniture d'un gabarit (50), en particulier d'un gabarit négatif, avec plusieurs gabarits d'entretoise (51, 52, 53) orientés dans une première direction et disposés à espacement l'un de l'autre à une emplacement longitudinal respectif suivant une deuxième direction s'étendant perpendiculairement à la première direction, chaque gabarit d'entretoise (51, 52, 53) présentant un contour conformant (54, 55, 56), correspondant au moins partiellement à un profil de section transversale de la pièce à fabriquer (1) le long de la première direction à l'emplacement longitudinal respectif, de sorte que les contours (54, 55, 56) des gabarits d'entretoise (51, 52, 53) forment un tracé de surface de la pièce à fabriquer (1) par leur succession dans le gabarit (50),
ledit procédé de fabrication comprenant les étapes suivantes :
- fourniture d'un stratifié (5) présentant au moins une couche de mousse (13) et une première couche de support (11) renforcée par des fibres et étanche aux fluides, ladite première couche de support étant liée à la couche de mousse (13) par une première face ;
- déformabilité accordée au stratifié (5) par réalisation, préférentiellement commandée par ordinateur, d'une ou de plusieurs fentes (21, 22, 23, 26) sur une face du stratifié (5) suivant un motif de fentes (20) prédéfini, la ou les fentes (21, 22, 23, 26) traversant complètement ou ne pénétrant que partiellement dans la couche de mousse (13), mais sans pénétrer dans la première couche de support (11) ;
- mise en place du stratifié (5) rendu déformable dans le gabarit (50), la première couche de support (11) venant par sa face extérieure en contact avec les contours conformants (54, 55, 56) des gabarits d'entretoise (51, 52, 53), de sorte que le stratifié (5) prend le tracé de surface de la pièce à produire (1) défini par le gabarit (50) sur la face extérieure de la première couche de support (11) ;
- remplissage des espaces libres (28) restés dans les fentes (21, 22, 23, 26) après la mise en place du stratifié dans le gabarit (50) avec de la résine composite au moyen d'un processus d'injection, en particulier d'un procédé d'injection sous vide, ou application d'un produit semi-fini matrice-fibres préimprégné de résine composite sur la face du stratifié (5) opposée à la première couche de support (11), ou application d'un stratifié réalisé manuellement en tissu fibreux avec résine composite sur la face du stratifié (5) opposée à la première couche de support (11) ;
- attente du durcissement de la résine composite ;
- retrait de la pièce (1) ainsi obtenue hors du gabarit (50) après durcissement de la résine composite.

2. Procédé selon la revendication 1, **caractérisé en ce que** le stratifié présente une deuxième couche de support (12) renforcée par des fibres, liée à une deuxième face de la couche de mousse (13) opposée à la première face, et où la réalisation desdites une ou plusieurs fentes (21, 22, 23, 26) dans le stratifié (5) suivant le motif de fentes (20) prédéfini est telle que les fentes (21, 22, 23, 26) traversent complètement la deuxième couche de support (12).

3. Procédé selon la revendication 1 ou la revendication 2, **caractérisé en ce que** le durcissement de la résine composite est obtenu sous vide, une feuille (80) étanche aux fluides étant appliquée sur la face du stratifié (5) opposée à la première couche de support (11) ou sur le produit semi-fini matrice-fibres préimprégné ou sur le stratifié réalisé manuellement et est scellée par rapport au stratifié (5) sur les bords libres (18) du stratifié (5) ou du produit semi-fini matrice-fibres ou du stratifié réalisé manuellement.

4. Procédé selon l'une quelconque des revendications précédentes, **caractérisé en ce que** le stratifié (5) est fourni sous la forme de plusieurs panneaux de construction (10) séparés à structure stratifiée correspondante, est rendu déformable et est mis en place dans le gabarit (50), les plusieurs panneaux de construction (10) étant juxtaposés et raccordés entre eux lors de la mise en place dans le gabarit (50), en particulier par collage ou soudage.

5. Procédé selon la revendication 4, **caractérisé en ce que** les bords des panneaux de construction (10) sont découpés avant ou après réalisation de la déformabilité, préférentiellement commandée par ordinateur, de telle manière que des panneaux de construction (10) contigus viennent en butée sans espacement au moins au niveau de la première couche de support (11) après la mise en place dans le gabarit (50).

6. Procédé selon l'une quelconque des revendications précédentes, **caractérisé en ce que** le motif de fentes (20) est en nid d'abeilles (25).

7. Procédé selon l'une quelconque des revendications précédentes, **caractérisé en ce que** le motif de fentes (20) présente en fonction du tracé d'incurvation de la pièce à produire (1) des zones à profondeurs locales de fente différenciées, à largeurs locales de fente différenciées, à profils locaux de fente différenciés et/ou à forme de fente et/ou à densités locales de fente différenciées.

8. Procédé selon l'une quelconque des revendications précédentes, **caractérisé en ce que** le motif de fentes (20), préférentiellement assisté par ordinateur, est déterminé de telle manière qu'une densité locale de fente, forme de fente, largeur de fente et/ou profondeur de fente est supérieure dans les zones du stratifié (5) exigeant une déformabilité supérieure en fonction d'un tracé de surface plus incurvé de la pièce à produire (1), à une densité locale de fente, forme de fente, largeur de fente et/ou profondeur de fente dans les zones du stratifié (5) exigeant une déformabilité moindre en fonction d'un tracé de surface moins incurvé de la pièce à produire.

9. Procédé selon l'une quelconque des revendications précédentes, **caractérisé en ce que** le motif de fentes (20), en particulier un profil local de fente, une forme locale de fente, une densité locale de fente, une largeur locale de fente et/ou une profondeur locale de fente, préférentiellement assisté par ordinateur, est déterminé de telle manière que les flancs opposés des fentes en forme de rainure (21, 22, 23, 26) se contactent au moins partiellement après le stratifié est mis en place dans le gabarit (50) et/ou que le volume des espaces libres (28) définis par les fentes (21, 22, 23, 26) dans le stratifié (5) diminue d'au moins 50 % par déformation après le stratifié est mis en place dans le gabarit (50).

10. Procédé selon l'une quelconque des revendications précédentes, **caractérisé en ce qu'**au moins une partie des fentes (21, 22, 23, 26) présentent un profil de fente en V, trapézoïdal ou rectangulaire ou un profil de fente à deux parois de fente parallèles l'une à l'autre, au moins avant le stratifié est mis en place dans le gabarit (50).

11. Procédé selon l'une quelconque des revendications précédentes, **caractérisé en ce que** la couche de mousse (13) présente une mousse à pores fermés, une mousse dure ou une mousse dure à pores fermés.

12. Procédé selon l'une quelconque des revendications précédentes, **caractérisé en ce que** la première couche de support (11) et/ou la deuxième couche de support (12) présentent une plaque en plastique renforcée par des fibres.

13. Panneau de construction déformable (10) pour la production sans moule d'une pièce tridimensionnelle renforcée par des fibres (1), en particulier d'une coque de bateau (2), d'une pale de rotor ou d'un élément de façade, ledit panneau de construction (10) présentant une structure stratifiée comprenant au moins une couche de mousse (13) et une première couche de support (11) renforcée par des fibres, la première couche de support étant liée à une première face de la couche de mousse (13) et ledit panneau de construction (10) présentant une ou plusieurs fentes (21, 22, 23, 26) sur une face, lesquelles forment un motif de fentes (20), la ou les fentes (21, 22, 23, 26) traversant complètement ou ne pénétrant que partiellement dans la couche de mousse (13), mais sans pénétrer dans la première couche de support (11) et la première couche de support (11) renforcée par des fibres étant étanche aux fluides.

14. Panneau de construction (10) selon la revendication 13, **caractérisé en ce que** la structure stratifiée présente une deuxième couche de support (12) liée à une deuxième face de la couche de mousse (13) opposée à la première face, et où les fentes (21, 22, 23, 26) traversent complètement la deuxième couche de support (12).

15. Panneau de construction (10) selon la revendication 13 ou la revendication 14, **caractérisé en ce que** le motif de fentes (20) est en nid d'abeilles (25).

16. Panneau de construction (10) selon l'une quelconque des revendications 13 à 15, **caractérisé en ce que** le motif de fentes (20) présente des zones à profondeurs locales de fente différenciées, à largeurs locales de fente différenciées, à profils locaux de fente différenciés et/ou à forme de fente et/ou à densités locales de fente différenciées.

17. Panneau de construction (10) selon l'une quelconque des revendications 13 à 16, **caractérisé en ce qu'**au moins une partie des fentes (21, 22, 23, 26) présentent un profil de fente en V, trapézoïdal ou rectangulaire ou un profil de fente à deux parois de fente parallèles l'une à l'autre.

18. Panneau de construction (10) selon l'une quelconque des revendications 13 à 17, **caractérisé en ce que** la mousse de la couche de mousse (13) est une mousse à pores fermés et/ou une mousse dure.

19. Panneau de construction (10) selon l'une quelconque des revendications 13 à 18, **caractérisé en ce que** la première couche de support (11) et/ou la deuxième couche de support (12) comprennent une plaque en plastique renforcée par des fibres.
